# EUROPEAN PATENT SPECIFICATION

(11) **EP 2 356 197 B1**
(45) Date of publication and mention of the grant of the patent: **22.05.2019**
(21) Application number: 09759987.2
(22) Date of filing: 16.10.2009
(51) Int. Cl.: C10G 3/00, C10G 45/00

(54) **PROCESS FOR THE PRODUCTION OF HYDROCARBON COMPOSITION USEFUL AS FUEL AND COMBUSTIBLE OBTAINED FROM OIL COMPONENTS AND A BIOLOGICAL COMPONENT**
VERFAHREN ZUR HERSTELLUNG EINER KOHLENWASSERSTOFFZUSAMMENSETZUNG, DIE ALS KRAFTSTOFF UND BRENNSTOFF VERWENDBAR IST, ERHALTEN AUS ÖLKOMPONENTEN UND EINER BIOLOGISCHEN KOMPONENTE
PROCEDE POUR LA PRODUCTION D'UNE COMPOSITION D'HYDROCARBURES UTILE COMME CARBURANT ET COMBUSTIBLE OBTENUE À PARTIR DE COMPOSANTS À BASE D'HUILE ET D'UN COMPOSANT BIOLOGIQUE

(30) Priority: 22.10.2008 IT MI20081868
(43) Date of publication of application: 17.08.2011
(73) Proprietor: ENI S.p.A., 00144 Rome (IT)
(72) Inventor: BALDIRAGHI, Franco, I-20077 Melegnano (Milano) (IT); GUANZIROLI, Silvia, I-20052 Monza (Milano) (IT); FARACI, Giovanni, I-20097 San Donato Milanese (Milano) (IT); RISPOLI, Giacomo, I-00136 Roma (IT)
(74) Representative: Bottero, Carlo
(86) International application number: PCT/IB2009/007158
(87) International publication number: WO 2010/046746

(56) References cited:
- EP-A1- 1 693 432
- WO-A1-2007/003709
- FR-A1- 2 910 485
- US-A- 4 992 605
- US-A1- 2004 144 689
- US-A1- 2008 173 570

## Description

The invention relates to a process for preparing a hydrocarbon composition, which can be used as fuel and/or combustible obtained by means of a process which comprises subjecting a gasoil component, a gasoline component and a component of biological origin to hydrotreatment. In particular, the hydrocarbon component is obtained by subjecting a mixture containing a gasoil component, a gasoline component and a component of biological origin to hydrotreatment. The components can be mixed with each other before being fed to the hydrotreatment, or the mixing can be effected during the hydrotreatment itself.

The addition of alkyl esters of fatty acids to compositions of diesel fuel in order to reduce the environmental impact deriving from the use of conventional fuels of a petroleum origin, is known. The addition of these compounds of a biological origin, however, can cause a deterioration in the quality of the resulting mixture, due to the fact that these compounds create problems of instability linked to the presence of unsaturations in addition to a reduced energy content per mass unit and also problems relating to the entrainment of water, due to their hydrophilic nature, and fouling, with a potentially negative effect on present-day diesel engines and fuel and combustible distribution systems in general.

Patent application WO2004/022674 describes a composition for diesel engines containing:
a) from 0.1 to 99% by volume of a component of a biological origin obtained by the hydrogenation and decomposition of fatty acids or esters of fatty acids giving hydrocarbons which are possibly subsequently isomerized,
b) 0-20% by volume of an oxygenated component, both components (a) and (b) being mixed with a diesel component. Component (a) is preferably used in the form which has undergone isomerization and from the examples high quantities of said isomerized component (a) are necessary, from 30 to 60%, for obtaining significant variations in the cetane number.

Patent application EP 1693432 describes a hydroconversion process of a mixture containing from 1 to 75% by weight of an oil or natural fat (1) and, as the remaining part, a mineral oil (2).

Patent application WO 2007/003709 describes a process for the preparation of hydrocarbon blends within the diesel range, which comprises subjecting a feedstock of a biological origin containing over 5% of free fatty acids and a diluting agent selected from hydrocarbons of a biological or non-biological origin, in particular preferably a recycled product of the same process, to a first hydrotreatment step and a second isomerization step.

Patent application WO2008/058664 describes a process for producing hydrocarbon fractions which can be used as diesel fuel starting from a mixture of a biological origin containing esters of fatty acids, possibly with quantities of free fatty acids, by means of a process which comprises the following steps:
1) hydrodeoxygenation of the mixture of a biological origin;
2) hydroisomerization of the mixture resulting from step (1), after possible purification treatment, said hydroisomerization being effected in the presence of a catalytic system which comprises:
   a) a carrier of an acid nature comprising a completely amorphous micro-mesoporous silico-alumina having an SiO₂/Al₂O₃ molar ratio ranging from 30 to 500, a surface area greater than 500 m²/g, a pore volume ranging from 0.3 to 1.3 ml/g, an average pore diameter of less than 40 Ǻ,
   b) a metallic component containing one or more metals of group VIII, possibly mixed with one or more metals of group VIB.

Patent application WO2008/113492 describes a hydrocarbon composition containing an oil component (A) and a component of a biological origin (B), wherein said component (B) is present in a quantity which reaches up to 75% v/v with respect to the total composition, and wherein said component (B) is prepared starting from a mixture of a biological origin (C) containing esters of fatty acids, possibly with quantities of free fatty acids, by means of a process which comprises the following steps:
1) hydrodeoxygenation of the mixture of a biological origin (C);
2) hydroisomerization of the mixture resulting from step (1), after possible separation of the water and gas flow.

MI2008A001641 describes a hydrocarbon composition, which can be used as fuel and/or combustible, obtained by means of a process comprising a hydrodeoxygenation step of a mixture of a biological origin containing esters of fatty acids, possibly with quantities of free fatty acids, and a mixing step with a component of a petroleum origin, said mixing step optionally effected before or after the hydrodeoxygenation step. FR 2 910 485 discloses a hydroconversion process.

A process for preparing hydrocarbon compositions have now been found, which can be used as fuel and/or combustible, which comprises subjecting a gasoil component, a gasoline component and a component of biological origin to hydrotreatment. In particular, these compositions are obtained by means of a process which comprises subjecting a mixture containing a gasoil component, a gasoline component and a component of biological origin to hydrotreatment. The components can be mixed with each other before being fed to the hydrotreatment, or the mixing can be effected in the hydrotreatment reactor during the same hydrotreatment process.

These compositions have improved characteristics in terms of low-temperature properties, and excellent characteristics with respect to the cetane number and density. The content of aromatic compounds and, in particular, poly-aromatic compounds, is extremely low. The use of the gasoline component in the preparation of the hydrocarbon compositions of the present invention give these compositions density characteristics within the minimum specification limits, as for example when light gasoils, for example primary distillates, are used as gasoil component, and a high concentration of biological component is adopted, for example a concentration higher than 20% w/w with respect to the total mixture subjected to hydrotreatment. The particular formulation of the composition of the present invention therefore provides the considerable advantage of enabling a relatively high quantity of biological component, i.e. a component deriving from a renewable source, to be introduced and also to exploit possible surpluses of gasoline as gasoil component.

Therefore an object of the present invention is a process according to the appended claims.

The compositions thus obtained can be used directly both as diesel fuel for engines and also as gasoil for heating.

According to one operating mode of the present invention, the components are mixed with each other and the resulting mixture is fed to the hydrotreatment reactor. According to another operating mode of the invention, the mixing of the components can be effected inside the same hydrotreatment reactor, feeding gasoil, gasoline and biological component separately, to the head of the reactor and/or into various points of the reactor, for example between the catalytic beds or, in the case of reactors in series, between the reactors themselves.

A preferred aspect is to feed the gasoil component and the gasoline component to the head of the reactor and the component of a biological origin into different points of the reactor, for example between the catalytic beds or between reactors in series.

It is also possible to operate in a mixed mode, i.e. by feeding a mixture consisting of two components, or all three components, to the head of the reactor, and part of component (A) and/or part of the component (A1), and/or part of component (B), and/or mixtures thereof, separately, into different points of the reactor.

The hydrocarbon composition (C) obtained by the process according to the present invention is characterized by excellent cetane and density properties. The cetane index is higher than 50 and the density within the range of 820-845 Kg/m³. The content of poly-aromatic compounds is lower than 1% by weight with respect to the total weight of the hydrocarbon composition (C), the total content of aromatic compounds is lower than 20% by weight with respect to the total weight of the hydrocarbon composition (C).

The mixture which is subjected to the hydrotreatment process, whether it be prepared before or in the hydrotreatment reactor during the hydrotreatment itself, contains gasoil in a quantity ranging from 20 to 95% w/w, gasoline in a quantity ranging from 1 to 40% w/w, the biological component in a quantity ranging from 4 to 60% w/w, all the percentages referring to the total weight of the sum of the components. Preferably, the mixture that is subjected to hydrotreatment, whether it be prepared before or during the hydrotreatment, contains gasoil in a quantity ranging from 40 to 80% w/w, gasoline in a quantity ranging from 1 to 40% w/w, the biological component in a quantity ranging from 20 to 60% w/w, all the percentages referring to the total weight of the sum of the components.

Other possible additives present in the final composition are introduced after the hydrotreatment step.

The components of a biological origin (B) used in the present invention are mixtures containing esters of fatty acids, possibly with aliquots of free fatty acids. Said mixtures (B) can be of a vegetable or animal origin. Typically, the esters of fatty acids contained in said mixtures (B) are triglycerides of fatty acids, wherein the hydrocarbon chain of the fatty acid can contain from 12 to 24 carbon atoms and can be mono- or poly-unsaturated. The components of a biological origin (B) can be selected from vegetable oils, vegetable fats, animal fats, fish oils or mixtures thereof. Oils or vegetable fats can be sunflower, rape, canola, palm, soya, hemp, olive, linseed, peanut, castor, mustard, coconut, Jatropha, Virola oils, algal oils, fatty oils contained in pine wood ("tall oil"), or mixtures thereof. The animal oils or fats can be selected from lard, tallow, milk fats and mixtures thereof. Recycled oils or fats from the food industry can also be used, of both an animal and vegetable origin. The vegetable oils or fats can also derive from plants selected by means of genetic engineering.

As far as the gasoil component (A) is concerned, gasoils from primary distillation and conversion processes can be well-used. In particular, Light Cycle Oil (LCO), gasoils from thermal conversion and gasoils from residue conversion can be well-used, in particular by means of fixed bed, ebullated bed and slurry processes.

Components deriving from the mixing of these diesel cuts are also suitable as type-A components.

The sulfur content of the type-A component is preferably lower than 3% by weight.

As far as the gasoline component (A1) is concerned, gasolines characterized by a T95 (ASTM D86) not higher than 240°C, are used where T95 refers to the temperature at which 95% by volume of gasoline distills. Gasolines with a T95 lower than 240°C, having a density ranging from 855 to 910 kg/m³, are used. Said gasolines have a cp (cloud point, corresponding to a Fog Point measured according to the method EN23015) lower than -40°C. Said gasolines have a content of aromatic compounds higher than 50% by weight with respect to the total weight of the gasoline. Gasolines which can be well-used are those deriving from catalytic processes, preferably deriving from fluid bed catalytic cracking processes (FCC), reforming processes, and mixtures thereof. In particular HCN gasolines, i.e. heavy gasolines from FCC as such or desulfurized, and gasolines called Heavy Reformed, i.e. heavy gasolines from reforming, or mixtures thereof, are therefore used.

Particularly preferred mixtures to be subjected to hydrotreatment, whether they be prepared before or during the hydrotreatment itself, are those in which the component (A) is LCO, preferably in a quantity ranging from 30 to 70% w/w, the component (A1) is a HCN gasoline or a Heavy reformed gasoline, preferably in a quantity ranging from 1 to 20% w/w, and the component of a biological origin is preferably in a quantity ranging from 20 to 50% w/w, all the percentages referring to the weight of the sum of the components.

The compositioncan also contain additives for improving the low-temperature behaviour, detergents, additives for improving the lubricity, anti-foam agents, cetane number improvers, anti-rust agents, antioxidants, anti-wear agents, antistatic products. The concentration of each of these additives is preferably not higher than 2% by weight.

The hydrotreatment of components (A), (A1) and (B) can be effected in the presence of hydrogen with all the methods and catalysts known to experts in the field. According to a preferred aspect, the hydrotreatment can be carried out according to what is described in patent application WO 2008/058664 relating to the hydrodeoxygenation step. During the hydrotreatment, various transformations can take place, among which hydrogenation of the double bonds present, in particular of those present in the ester chains of triglycerides, cracking of the triglyceride structure, deoxygenation by means of both decarboxylation and also hydrogenation with the formation of water and desulfurization through the transformation of the sulfur present to H₂S.

The catalysts used are all hydrogenation and hydrotreatment catalysts containing one or more metals selected from metals of group VIII (Fe, Co, Ni, Ru, Rh, Pd, Os, Ir, Pt) and group VIB (Cr, Mo, W) suitably supported. Suitable carriers for the purpose are composed of one or more metal oxides, preferably alumina, silica, titania, zirconia or mixtures thereof. Zeolites and mixed oxides are suitable as carriers, in particular silico-aluminas of the MSA type, where MSA is a silico-alumina having particular characteristics, described in EP340868, EP659478, EP812804.

The metal or metals are preferably selected from Pd, Pt, Ni, or from pairs of metals Ni-Mo, Ni-W, Co-Mo and Co-W, Ni-Mo and Co-Mo being preferred.

The metal of group VIII can be well-used in a quantity ranging from 0.1 to 5% by weight with respect to the total weight of the catalytic composition. The metal of group VIB can be well-used in a quantity ranging from 1 to 50%, even more preferably in a quantity ranging from 5 to 35% by weight with respect to the total weight of the catalytic composition. The weight percentage of the metal, or metals, refers to the content of metal expressed as metallic element in the final catalyst, after calcination, said metal is in oxide form.

These catalysts are typically prepared by means of impregnation of the oxide carrier with a solution of a suitable salt of the metal or metals. All techniques known to experts in the field can be used. For example, the carrier can be wet with an aqueous solution of the metal of group VIII, operating at room temperature and at a pH ranging from 1 to 4. The aqueous solution preferably has a concentration of metal expressed as g/l ranging from 0.2 to 2.0. The impregnation is then followed by a thermal treatment in an atmosphere suitable for decomposing the salt precursor and obtaining the supported metal. The resulting product can be dried, for example, preferably in air, at room temperature, and is calcined in an oxidizing atmosphere at a temperature ranging from 200 to 600°C. It is also possible to proceed with subsequent impregnations in order to reach the desired level of metal charge and also to differentiate their supporting, in the case of more than one metal.

The ion exchange technique can also be well used: in this case, the carrier is suspended in an aqueous solution of a complex or metal salt, operating at room temperature and a pH of 6 to 10. After the exchange, the solid is separated, washed with water, dried and thermally treated in an inert or oxidizing atmosphere, at a temperature ranging from 200 to 600°C.

Compounds which are suitable for the above preparations are, for example: H₂PtCl₆, PdCl₂, (CH₃COO)₂Ni, (CH₃COO)₂Co.
When the catalyst contains both a metal from group VIII and a metal from group VIB, the carrier can be wet with an aqueous solution of group VIB, operating at room temperature. After the impregnation, the solid is dried and an impregnation is then effected with an aqueous solution of a compound of a metal of group VIII. The solid is then dried and treated in an oxidizing atmosphere, at a temperature ranging from 200 to 600°C. Alternatively, a single solution containing both metals can be adopted.

Processes are also well-known for the production of these catalysts, instead of by impregnation, by precipitation of the metallic precursor from a saline solution of the same metal on the carrier, or by coprecipitation of the various components of the catalyst, i.e. of the metal and carrier. Catalytic compositions such as Ni-Mo-P on zeolite can also be well used, in which the phosphorous can be introduced by impregnation, for example, and Pd/Zeolite. Suitable catalysts which can be used are described for example in J.T. Richardson, "Principles of catalyst development", Plenum Press, New York, 1989, Chapter 6; in "Hydrotreatment and hydrocracking of oil fraction" G.F. Froment, B. Del Mon, P. Grange, page 195, Elsevier (1997); in J. Scherzer, A.J. Gruia, Hydrocracking Science and Technology, Marcel Dekker N.Y. 1996, Chapters 4 and 5.

The catalysts of the type Ni-Mo, Ni-W, Co-Mo and Co-W preferably previously undergo sulfidation. The pre-sulfidation procedure is effected according to the known techniques.

The hydrotreatment reaction is carried out in a reaction zone comprising one or more catalytic beds, these beds can contain the same or different hydrotreatment catalysts. It is possible to operate in one or more reactors. According to a preferred aspect, the reaction is carried out in a typical fixed bed hydrotreatment reactor. The stream of hydrogen and feedstock can be sent in equicurrent or countercurrent. The reactor can have adiabatic catalytic beds in a number higher than or equal to 2. As this is an exothermic reaction, with the production of heat, there will be a temperature rise in each catalytic bed. By feeding, between one catalytic bed and another, a stream of hydrogen and/or liquid feedstock and/or at least part of one or more of components (A), (A1) and (B), and/or product, at a certain temperature, it is possible to obtain a constant or increasing temperature profile. This operating mode is normally indicated as "splitted feed". For a better regulation of the thermal profile in the reactor with adiabatic layers, the reactor itself can be run with the recirculation of a part of the effluents, according to the typology known as recycling reactor. The function of the recycling is to dilute the fresh feedstock in the reactor thus limiting the thermal peaks due to the exothermicity of the reaction. The recycling ratio, i.e. the amount of recirculated fraction with respect to the fresh feedstock can vary from 0.5 to 5 w/w.

The hydrotreatment is carried out at a pressure varying from 50 to 100 bar, preferably from 70 to 100 bar, and at a temperature ranging from 320 to 420°C, preferably from 340 to 380°C. It is operated with an LHSV ranging from 0.5 to 2 hours⁻¹, even more preferably from 0.5 to 1 hour⁻¹. The H₂/feedstock ratio ranges from 200 to 1,000 Nl/l, even more preferably from 500 to 1,000 Nl/l.

Before being used, the component of a biological origin (B) can be suitably treated in order to remove the content of alkaline metals (for example Na, K) and alkaline earth metals (for example Ca), possibly contained in the feedstock. This pre-treatment can be carried out by adsorption on a suitable material: for example, the known percolation techniques can be used on a column filled with acidic earth or clays such as for example acid montmorillonites, bentonites, smectites, sepiolites. For this purpose, the products available on the market such as Filtrol, Tonsil, Bentolites H and L, SAT-1, can be used.

Alternatively, ion exchange resins can be used, or slightly acid washings, effected for example by contact with sulfuric acid, nitric acid or hydrochloric acid, preferably at room temperature and atmospheric pressure.

The effluents of the hydrotreatment process are preferably subjected to purification treatment comprising a separation step and a washing step. According to this preferred aspect, the effluents of the hydrotreatment process are sent to a gas-liquid separation system. A gaseous phase, essentially consisting of hydrogen, water possibly entrained, CO and CO₂ and light paraffins (C₄⁻), is recovered. NH₃, PH₃ and H₂S can also be present in a quantity which varies according to the nature of the feedstock. After separation, the gaseous phase is cooled and the water (possibly containing traces of alcohols and carboxylic acids) and condensable hydrocarbons are separated by condensation. The remaining gaseous phase is purified to allow the recycling of hydrogen to the hydrotreatment process. Methods of the known art are adopted for the purification, by means of caustic washings, for example with aqueous solutions of NaOH or Ca(OH)₂, or by means of the well-known purification technique with amines (for example MEA, mono-ethanolamine, or DEA, diethanolamine). At the end of the purification the CO₂, H₂S, PH₃ and NH₃ are removed and the gaseous fraction thus obtained essentially consists of H₂ with possible traces of CO. In order to limit the accumulation of CO in the recycled gases, it can be removed by washing with cuproammonia or by methanation, according to technologies known to experts in the field.

The liquid phase separated in the separation system consists of a hydrocarbon composition according to the present invention. Depending on the operating conditions of the separator, the liquid fraction can contain variable quantities of H₂O and oxygenated compounds, such as for example alcohols and carbonyl compounds. The residual S can be lower than 10 ppm.

In order to describe the present invention in more detail, some examples of the preparation and use of the compositions, object of the present invention, are provided, which however are purely illustrative of particular aspects of the invention and can in no way be considered as limiting the overall scope of the invention.

### Example 1

In this example a soya oil is used, having the characteristics indicated in Table 1: in particular, with respect to the composition, the content of esters of fatty acids is expressed as a description and percentage of the corresponding free acids; the actual content of free acids is expressed by means of the acidity and corresponds to a percentage of free fatty acids of 0.06% by weight with respect to the total weight of the oil.

The soya oil is mixed with a LCO component, as type (A) component, and a desulfurized HCN component (des. HCN), as type (A1) component having the characteristics indicated in Table 2. The components are mixed in the proportions Soya oil:LCO:desulfurized HCN of 40:40:20.

**Table 1**

| | **Refined Soya Oil** |
|---|---|
| Palmitic acid % * (C16-0) | 13.06 |
| Stearic acid % * (C18-0) | 0.84 |
| Oleic acid % * (C18-1) | 27.09 |
| Linoleic acid % * (C18-2) | 53.63 |
| Linolenic acid % * (C18-3) | 5.11 |
| Arachidic acid % (C20-0) | 0.07 |
| Acidity (mgKOH/g) | 0.11 |
| H₂O (ppm) | 2200 |
| Na (ppm) | 0.3 |
| K (ppm) | 0.3 |
| Ca (ppm) | 0.3 |
| Mg (ppm) | 0.1 |
| Al (ppm) | <0.1 |
| P (ppm) | 0.65 |
| Fe (ppm) | <0.1 |
| Cu (ppm) | <0.1 |

| | |
|---|---|
| * The first number in brackets indicates the carbon atoms, the second the unsaturations. | |

**Table 2**

| | | LCO | Des. HCN |
|---|---|---|---|
| Carbon | w % | 88.8 | |
| Hydrogen | w % | 9.9 | |
| | | | |
| Density | Kg/m3 | 950.5 | 877.1 |
| Sulfur | w % | 0.78 | 0.04 |
| Cloud Point | °C | | <-40 |
| Mono-aromatics | w % | 13.4 | 66.7 |
| Di-aromatics | w % | 60.6 | 13.8 |
| Tri-aromatics | w % | 4.4 | 0.2 |
| Poly-aromatics | w % | 65 | 14 |
| Total aromatics | w % | 78.4 | 80.7 |
| | | | |

| Distillation | | ASTM D2887 | ASTM D86 |
|---|---|---|---|
| i.b.p. | °C | 165 | 188 |
| 5% | °C | 228 | 188 |
| 10% | °C | 244 | 189 |
| 30% | °C | 268 | 195 |
| 50% | °C | 285 | 202 |
| 70% | °C | 305 | 209 |
| 90% | °C | 331 | 225 |
| 95% | °C | 344 | 234 |
| f.b.p. | °C | 372 | 262 |

In Table 2, i.b.p. means the initial boiling point and f.b.p. the final boiling point.

The mixture resulting from the mixing of the three components is fed with hydrogen in equicurrent in the presence of the commercial desulfurization catalyst based on sulfidated NiMo/Al₂O₃ UOP UF210. The sulfidation of the catalyst is effected in situ using gasoil containing dimethylsulfide (DMDS) in a concentration of 5% by weight, at a temperature which progressively varies from room temperature to 320°C, at a pressure of 45 bar, with a H₂/gasoil ratio of 200 and a LHSV of 3 hours⁻¹. The feedstock and hydrogen flow in the reactor in a descending mode.

The characteristics of the feedstock resulting from the mixing of the three components are indicated in Table 3 below:

**Table 3**

| | | |
|---|---|---|
| Carbon | % | 84.4 |
| Hydrogen | % | 10.5 |
| Oxygen | % | 4.81 |
| Density | Kg/m³ | 924.7 |
| S | % | 0.29 |
| N | ppm | 248 |

The operating conditions used for the hydrotreatment are the following:
- Temperature : 380°C
- LHSV : 0.5 hours⁻¹
- Pressure : 100 bar
- H₂/gasoil: 900 Nl/l

The effluent product is separated, in a gas/liquid separator, from the gaseous fractions consisting of H₂, CO/CO₂, H₂S and light hydrocarbons.

The characteristics of the liquid product obtained after separation are indicated in Table 4.

### Example 2 - comparative

Example 1 is repeated using a mixture composed of the LCO of Table 2 and soya oil of Table 1, as feedstock, in the proportions soya oil:LCO of 40:60.

The characteristics of the liquid product are indicated in Table 4.

**Table 4**

| Composition | | LCO + soya oil | LCO+HCN+ soya oil |
|---|---|---|---|
| Feedstock | w% | 60-40 | 40 - 20 - 40 |
| Pressure | bar | 100 | 100 |
| LHSV | hours⁻¹ | 0.5 | 0.5 |
| Temperature | °C | 380 | 380 |
| C | w% | 85.8 | 85.8 |
| H | w% | 13.9 | 14 |
| S | mg/kg | < 3 | < 3 |
| Cloud Point | °C | -1 | -3 |
| Mono-aromatics | w% | 11.5 | 12.6 |
| Di-aromatics | w% | 0.7 | 0.6 |
| Tri-aromatics | w% | -2101 | 0.2 |
| Density | kg/m³ | 830 | 824.9 |
| | | Distillation D2887 | Distillation D2887 |

In Table 4, cloud point (cp) refers to the Fog Point measured according to the method EN 23015; i.b.p. means the initial boiling point and f.b.p. the final boiling point.

On comparing the results obtained, it can be seen that the composition obtained by hydrotreatment of a feedstock containing a gasoil component, a component of a biological origin and a gasoline component has improved characteristics in terms of low-temperature properties. From the above data it is also evident that it is possible, through the present invention, to exploit and upgrade gasoline cuts into gasoil.

## Claims

1. Hydroconversion process for preparing hydrocarbon compositions comprising the step of subjecting to hydrotreatment the following composition:
- a gasoil component (A) in amounts in the range of 20 to 95% w/w,
- a gasoline component (A1) in amounts in the range of 1 to 40 % w/w,
- a component of biological origin (B) containing esters of fatty acids, with possible amounts of free fatty acids, the biological component in amounts in the range of 4 and 60 % w/w,
all the percentages referring to the total weight of the sum of the components,
wherein said gasoline has a T95 not exceeding 240°C, a density in the range of from 855 to 910 kg/m³, an aromatic content greater than 50% by weight and a cloud point below -40°C,
wherein the hydrotreatment is performed in the presence of hydrogen and of a hydrogenation catalyst containing a support and one or more metals selected from among metals of Group VIII and Group VIB,
at a temperature varying between 320 and 420°C, a pressure varying between 70 and 100 bars, a LHSV in the range of from 0.5 to 2 h⁻¹, a H₂/feed ratio in the range of from 200 to 1000 Nl/l.

2. Process according to claim 1 wherein the components (A), (A1) and (B) are mixed to each other and the resulting mixture is supplied to the hydrotreatment.

3. Process according to claim 1 wherein the mixing of the components (A), (A1) and (B) is performed inside the hydrotreatment reactor, feeding gasoil, gasoline and biological component separately, to the head of the reactor and/or at different points of the reactor, or, in case of reactors in series, between the reactors themselves.

4. Process according to claim 1 wherein the gasoil component and the gasoline component are fed to the head of the reactor and the component of biological origin is fed to different points of the reactor.

5. Process according to claim 1 wherein supplied is a mixture made up of two components, or of all the three components, to the head of the reactor, and part of component (A) and/or part of component (A1) and/or part of component (B), separately, to various points of the reactor.

6. Process according to claim 1 wherein the gasoil component (A) is selected from among gasoils resulting from primary distillation, gasoils from conversion processes and their mixtures.

7. Process according to claim 6, wherein the gasoils from conversion processes are selected among Light Cycle Oil (LCO), gasoils resulting from thermal conversion, gasoils resulting from conversion of residues and their mixtures.

8. Process according to claim 1 wherein the mixture subjected to hydrotreatment contains gasoil in amounts in the range of 40 to 80 % w/w, gasoline in amounts in the range of 1 to 40 % w/w, the biological component in amounts in the range of 20 to 60 % w/w, all percentages referring to the total weight of the sum of the components.

9. Process according to claim 1 containing additives added after the hydrotreatment step.

10. Process according to claim 1 wherein the component of biological origin (B) is a mixture containing esters of fatty acids, with possible amounts of free fatty acids.

11. Process according to claim 10 wherein the mixture of biological origin (B) is a mixture of vegetable or animal origin.

12. Process according to claim 10 or 11, wherein the esters of fatty acids contained in the mixtures of biological origin are triglycerides of fatty acids, wherein the hydrocarbon chain of the fatty acid contains 12 - 24 carbon atoms and it is mono or poly-unsaturated.

13. Process according to claim 10, 11 or 12, wherein the mixtures of biological origin can be selected from among vegetable oils, vegetable fats, animal fats, fish oils or their mixtures.

14. Process according to claim 13, wherein the vegetable oils or fats, possibly derived from plants selected through genetic manipulation, are selected from among sunflower, rape, canola, palm, soy bean, hemp, olive, linseed, mustard, groundnut, castor, coconut, Jatropha, Virola oils, algae oils, oils or fats contained in pine tree pulps ("tall oil"), oils or fats recycled from the food industry and their mixtures, and the animal oils or fats are selected from among lard, pig fat, tallow, milk fats, oils or fats recycled from the food industry and their mixtures.

15. Process according to claim 1, wherein in the hydrotreatment, the gasoil component (A) is selected from among gasoils resulting from primary distillation, gasoils from conversion processes and their mixtures.

16. Process according to claim 15, wherein component (A) is selected between Light Cycle Oil (LCO), gasoils resulting from thermal conversion, gasoils resulting from conversion of residues and their mixtures.

17. Process according to claim 16, wherein the gasoils resulting from the conversion of residues derive from fixed bed, ebullated bed and slurry process.

18. Process according to claim 1 wherein the gasoline component (A1) has a T95 not exceeding 240 °C.

19. Process according to claim 1, or 18 wherein the gasoline is selected from among the gasolines derived from catalytic processes, the gasolines derived from reforming processes, and their mixtures.

20. Process according to claim 19 wherein the gasoline is selected from among heavy FCC gasolines as it is or desulphurised, heavy reforming gasoline and their mixtures.

21. Process according to claim 1 or 8 wherein component (A) is LCO in amounts in the range of 30 to 70% w/w, component (A1) is selected from among HCN or Heavy reformed gasolines, in amount in the range of 1 to 20 % w/w, and the component of biological origin is in amounts in the range of 20 to 50 % w/w, all percentages referring to the total weight of the sum of the components.

22. Process according to claim 1 additionally containing additives to improve the cold properties, anti-foam, cetane number improvers, anti-rust agent, detergents, additives to improve lubricity, antioxidant agents, anti-wear agents, anti-static agents.

23. Process according to claim 1 wherein the support for the hydrotreatment catalyst is selected from among alumina, silica, zirconia, titania, zeolite, mixed oxides, or their mixtures.

24. Process according to claim 1 wherein the metal or metals contained in the hydrotreatment catalyst are selected from among Pd, Pt, Ni, or from among the Ni-Mo, Ni-W, Co-Mo and Co-W pairs of metals.

25. Process according to claim 1 wherein the hydrotreatment catalyst is selected from among the Ni-Mo-P catalytic compositions on zeolite, and Pd/Zeolite.

26. Process according to claim 1 wherein the hydrotreatment is performed in a reaction zone comprising one or more catalytic beds, in one or more reactors.

27. Process according to claim 1 or 26 wherein the hydrotreatment is performed in a reaction zone comprising one or more catalytic beds containing identical or different hydrotreatment catalysts.

28. Process according to claim 1 wherein the hydrotreatment is performed at a temperature varying between 340 and 380 °C.

29. Process according to claim 1 wherein the hydrotreatment is performed at a pressure varying between 50 and 100 bars.

30. Process according to claim 24 wherein Ni-Mo, Ni-W, Co-Mo and Co-W base catalysts are sulfphurised before being used.

31. Process according to claim 1 wherein the component of biological origin is subjected to a pre-treatment before being subjected to hydrotreatment, wherein said pre-treatment is performed through adsorption, treatment with ion exchange resins or slightly acid washings.

## Patentansprüche

1. Hydrokonversionsverfahren zur Herstellung von Kohlenwasserstoffzusammensetzungen, umfassend den Schritt der Unterwerfung der folgenden Zusammensetzung einer Hydrobehandlung:
- einer Gasölkomponente (A) in Mengen in einem Bereich von 20 bis 95 % w/w,
- einer Gasolinkomponente (A1) in Mengen in einem Bereich von 1 bis 40 w/w,
- einer Komponente von biologischem Ursprung (B), enthaltend Ester von Fettsäuren, gegebenenfalls mit Mengen an freien Fettsäuren, wobei die biologische Komponente in Mengen in einem Bereich von 4 und 60 % w/w vorliegt,
alle Prozentsatzangaben beziehen sich auf das Gesamtgewicht der Summe der Bestandteile, wobei das Gasolin eine T95 von nicht größer als 240°C, eine Dichte in einem Bereich von 855 bis 910 kg/m³, einen aromatischen Gehalt größer als 50 Gew.-% und einen Trübungspunkt unterhalb -40°C hat,
wobei die Hydrobehandlung ausgeführt wird in der Gegenwart von Wasserstoff und eines Hydrogenierungskatalysatoren, enthaltend einen Träger und einen oder mehrere Metalle, ausgewählt aus den Metallen der Gruppe VIII und Gruppe VIB,
bei einer Temperatur in einem Bereich zwischen 320 und 420°C, einem Druck in einem Bereich zwischen 70 und 100 Bar, einem LHSV-Wert in einem Bereich von 0,5 bis 2 h⁻¹, einem H₂/Einspeisungs-Verhältnis in einem Bereich von 200 bis 1 000 Nl/l.

2. Verfahren nach Anspruch 1, worin die Komponenten (A), (A1) und (B) miteinander vermischt werden und die erhaltene Mischung der Hydrobehandlung zugeführt wird.

3. Verfahren nach Anspruch 1, worin das Mischen der Komponenten (A), (A1) und (B) innerhalb des Hydrobehandlungsreaktors durchgeführt wird, wobei Gasöl, Gasolin und biologische Komponente separat zum Kopf des Reaktors und/oder bei unterschiedlichen Punkten des Reaktors eingespeist werden, oder, im Fall von Reaktoren in Serie, zwischen den Reaktoren selber.

4. Verfahren nach Anspruch 1, worin die Gasölkomponente und die Gasolinkomponente dem Kopf des Reaktors zugeführt werden und die Komponente von biologischem Ursprung an unterschiedlichen Punkten des Reaktors eingespeist wird.

5. Verfahren nach Anspruch 1, wobei eine Mischung, bestehend aus zwei Komponenten oder aus allen drei Komponenten, dem Kopf des Reaktors zugeführt wird und ein Teil der Komponente (A) und/oder ein Teil der Komponente (A1) und/oder ein Teil der Komponente (B), getrennt, an verschiedenen Punkten des Reaktors.

6. Verfahren nach Anspruch 1, wobei die Gasölkomponente (A) ausgewählt wird aus Gasölen, die sich aus Primärdestillation ergeben, Gasölen aus Umwandlungsverfahren und deren Mischungen.

7. Verfahren nach Anspruch 6, wobei die Gasöle aus Umwandlungsverfahren ausgewählt sind aus Leicht-Zyklus-Öl (LCO), Gasölen, erhalten aus thermischen Konversionen, Gasölen, erhalten aus Konversion von Rückständen und deren Mischungen.

8. Verfahren nach Anspruch 1, worin die einer Hydrobehandlung unterworfene Mischung Gasöl in Mengen in einem Bereich von 40 bis 80 % w/w, Gasolin in Mengen in einem Bereich von 1 bis 40 % w/w, die biologische Komponente in Mengen in einem Bereich von 20 bis 60 % w/w enthält, wobei alle Prozentangaben sich auf das Gesamtgewicht der Summe der Komponenten beziehen.

9. Verfahren nach Anspruch 1, enthaltend Additive, die nach dem Hydrobehandlungsschritt zugegeben werden.

10. Verfahren nach Anspruch 1, worin die Komponente von biologischem Ursprung (B) eine Mischung ist, die Ester von Fettsäuren, mit gegebenenfalls Mengen an freien Fettsäuren, enthält.

11. Verfahren nach Anspruch 10, wobei die Mischung von biologischem Ursprung (B) eine Mischung von pflanzlichem oder tierischem Ursprung ist.

12. Verfahren nach Anspruch 10 oder 11, worin die in den Mischungen von biologischem Ursprung enthaltenden Ester von Fettsäuren Triglyceride von Fettsäuren sind, wobei die Kohlenwasserstoffkette der Fettsäure 12-24 Kohlenstoffatome enthält und mono- oder polyungesättigt ist.

13. Verfahren nach Anspruch 10, 11 oder 12, worin die Mischungen von biologischem Ursprung ausgewählt sein können aus pflanzlichen Ölen, pflanzlichen Fetten, tierischen Fetten, Fischölen oder deren Mischungen.

14. Verfahren nach Anspruch 13, wobei die pflanzlichen Öle oder Fette, gegebenenfalls abgeleitet von Pflanzen ausgewählt durch genetische Manipulation, ausgewählt sind aus Sonnenblumen, Raps, Canola, Palme, Sojabohne, Hanf, Olive, Leinsamen, Senf, Erdnuss, Rizinus, Kokosnuss, Jatropha, Virola-Ölen, Algenölen, Ölen oder Fetten enthalten in Kieferpulpen ("Tall-Öl"), Ölen oder Fetten rezykliert aus der Nahrungsmittelindustrie und deren Mischungen, und den tierischen Ölen oder Fetten, ausgewählt aus Schmalz, Schweinefett, Talg, Milchfetten, Ölen oder Fetten, rezykliert aus der Nahrungsmittelindustrie und deren Mischungen.

15. Verfahren nach Anspruch 1, worin in der Hydrobehandlung die Gasölkomponente (A) ausgewählt ist aus Gasölen, erhalten aus Primärdestillation, Gasölen aus Konversionsverfahren und deren Mischungen.

16. Verfahren nach Anspruch 15, worin die Komponente (A) ausgewählt ist aus Leicht-Zyklus-Öl (LCO), Gasölen erhalten aus thermischen Konversionen, Gasölen erhalten aus Konversion von Rückständen und deren Mischungen.

17. Verfahren nach Anspruch 16, worin die aus der Konversion von Rückständen erhaltenen Gasöle sich von Festbett-, Blasenbett- und Aufschlämmungsverfahren ableiten.

18. Verfahren nach Anspruch 1, worin die Gasolinkomponente (A1) eine T95 nicht größer als 240°C hat.

19. Verfahren nach Anspruch 1 oder 18, wobei das Gasolin ausgewählt ist aus Gasolinen abgeleitet aus katalytischen Verfahren, Gasolinen abgeleitet aus Reformierungsverfahren und deren Mischungen.

20. Verfahren nach Anspruch 19, wobei das Gasolin ausgewählt ist aus schweren FCC-Gasolinen, wie es ist oder entschwefelt, schwerem Reformierungsgasolin und deren Mischungen.

21. Verfahren nach Anspruch 1 oder 8, worin die Komponente (A) LCO ist, in Mengen in einem Bereich von 30 bis 70 % w/w, Komponente (A1) ist ausgewählt aus, unter anderem, HCN oder schweren Reformierungsgasolinen, in einer Menge in einem Bereich von 1 bis 20 % w/w, und die Komponente vom biologischen Ursprung ist in Mengen in einem Bereich von 20 bis 50 % w/w, wobei alle Prozentangaben sich auf das Gesamtgewicht der Summe der Komponenten bezieht.

22. Verfahren nach Anspruch 1, zusätzlich enthaltend Additive, um die Kalteigenschaften, Anti-Schaummittel, Cetan-Zahl-Verbesserer, Anti-Rostmittel, Detergenzien, Additive, um die Lubrizität zu verbessern, Anti-Oxidationsmittel, Anti-Verschleißmittel, anti-statische Mittel zu verbessern.

23. Verfahren nach Anspruch 1, worin der Träger für den Hydrobehandlungskatalysatoren ausgewählt ist aus Alumina, Silica, Zirkonia, Titania, Zeolith, gemischten Oxiden oder deren Mischungen.

24. Verfahren nach Anspruch 1, wobei das Metall oder die Metalle, enthalten in den Hydrobehandlungskatalysatoren, ausgewählt sind aus Pd, Pt, Ni oder aus Ni-Mo, Ni-W-, Co-Mo- und Co-W-Paaren von Metallen.

25. Verfahren nach Anspruch 1, wobei der Hydrobehandlungskatalysator ausgewählt ist aus Ni-Mo-P-katalytischen Zusammensetzungen auf Zeolith und Pd/Zeolithe.

26. Verfahren nach Anspruch 1, worin die Hydrobehandlung in einer Reaktionszone durchgeführt wird, die ein oder mehrere katalytische Betten umfasst, in einem oder mehreren Reaktoren.

27. Verfahren nach Anspruch 1 oder 26, wobei die Hydrobehandlung in einer Reaktionszone durchgeführt wird, die ein oder mehrere katalytische Betten umfasst, enthaltend identische oder unterschiedliche Hydrobehandlungskatalysatoren.

28. Verfahren nach Anspruch 1, wobei die Hydrobehandlung bei einer Temperatur in einem Bereich zwischen 340 und 380°C durchgeführt wird.

29. Verfahren nach Anspruch 1, wobei die Hydrobehandlung bei einem Druck in einem Bereich zwischen 50 und 100 Bar durchgeführt wird.

30. Verfahren nach Anspruch 24, worin die Ni-Mo-, Co-Mo- und Co-W-Basiskatalysatoren vor der Verwendung sulfurisiert werden.

31. Verfahren nach Anspruch 1, worin die Komponente von biologischem Ursprung einer Vorbehandlung unterworfen wird, bevor diese der Hydrobehandlung unterworfen wird, wobei die Vorbehandlung durchgeführt wird durch Adsorption, Behandlung mit Ionenaustauschharzen oder leicht sauren Wäschen.

## Revendications

1. Procédé d'hydroconversion pour la préparation de compositions d'hydrocarbures, comprenant l'étape consistant à soumettre à un hydrotraitement la composition suivante :
- un composant gazole (A) en des quantités dans la plage de 20 à 95 % p/p,
- un composant essence (A1) en des quantités dans la plage de 1 à 40 % p/p,
- un composant d'origine biologique (B) contenant des esters d'acides gras, avec d'éventuelles quantités d'acides gras libres, le composant biologique étant présent en des quantités dans la plage de 4 à 60 % p/p,
tous les pourcentages se rapportant au poids total de la somme des composants,
dans lequel ladite essence à une température T95 n'excédant pas 240 °C, une densité dans la plage de 855 à 910 kg/m³, une teneur en composés aromatiques supérieure à 50 % en poids et un point de rouble inférieur à -40 °C,
dans lequel on effectue l'hydrotraitement en la présence d'hydrogène et d'un catalyseur d'hydrogénation contenant un support et un métal ou plusieurs métaux choisi(s) parmi les métaux du groupe VIII et du groupe VI,
à une température dans la plage comprise entre 320 et 420 °C, sous une pression dans la plage comprise entre 70 et 100 bars, à un VVH dans la plage de 0,5 à 2 h⁻¹, un rapport H₂/charge dans la plage de 200 à 1 000 Nl/l.

2. Procédé selon la revendication 1, dans lequel on mélange entre eux les composants (A), (A1) et (B) et on envoie le mélange résultant à l'hydrotraitement.

3. Procédé selon la revendication 1, dans lequel on effectue le mélange des composants (A), (A1) et B) à l'intérieur du réacteur d'hydrotraitement, en introduisant séparément le gazole, l'essence et le composant biologique, à la tête du réacteur et/ou en différents points du réacteur ou, dans le cas de réacteurs en série, entre les réacteurs eux-mêmes.

4. Procédé selon la revendication 1, dans lequel on introduit le composant gazole et le composant essence à la tête du réacteur et on introduit le composant d'origine biologique en différents points du réacteur.

5. Procédé selon la revendication 1, dans lequel on introduit un mélange constitué de deux composants, ou de la totalité des trois composants, à la tête du réacteur, et une partie du composant (A) et/ou une partie du composant (A1) et/ou une partie du composant (B) séparément, en divers points du réacteur.

6. Procédé selon la revendication 1, dans lequel le composant gazole (A) est choisi parmi les gazoles résultant d'une distillation primaire, les gazoles résultant de processus de conversion, et leurs mélanges.

7. Procédé selon la revendication 6, dans lequel les gazoles provenant de processus de conversion sont choisis parmi un gazole léger de craquage catalytique (LCO), les gazoles résultant d'une conversion thermique, les gazoles résultant de la conversion de résidus, et leurs mélanges.

8. Procédé selon la revendication 1, dans lequel le mélange soumis au à l'hydrotraitement contient du gazole en des quantités dans la plage de 40 à 80 % p/p, de l'essence en des quantités dans la plage de 1 à 40 % p/p, le composant biologique en des quantités dans la plage de 20 à 60 % p/p, tous les pourcentages se rapportant au poids total de la somme des composants.

9. Procédé selon la revendication 1, contenant des additifs ajoutés après l'étape d' hydrotraitement.

10. Procédé selon la revendication 1, dans lequel le composant d'origine biologique (B) est un mélange contenant des esters d'acides gras, avec d'éventuelles quantités d'acides gras libres.

11. Procédé selon la revendication 10, dans lequel le mélange d'origine biologique (B) est un mélange d'origine végétale ou animale.

12. Procédé selon la revendication 10 ou 11, dans lequel les esters d'acides gras contenus dans les mélanges d'origine biologique sont des triglycérides d'acides gras, la chaîne hydrocarboné de l'acide gras contenant de 12 à 24 atomes de carbone et étant mono- ou polyinsaturée.

13. Procédé selon la revendication 10, 11 ou 12, dans lequel les mélanges d'origine biologique peuvent être choisis parmi les huiles végétales, les graisses végétales, les graisses animales, les huiles de poisson ou leurs mélanges.

14. Procédé selon la revendication 13, dans lequel les huiles ou graisses végétales, possiblement dérivées de plantes sélectionnées par manipulation génétique, sont choisies parmi les huiles de tournesol, colza, colza canola, palme, soja, chanvre, d'olive, de lin, moutarde, d'arachide, de ricin, coprah, jatropha, Virola, les huiles d'algues, les huiles ou graisses contenues dans les pâtes de pin « tallöl », les huiles ou graisses recyclées à partir de l'industrie alimentaire, et leurs mélanges, et les huiles ou graisses animales sont choisies parmi le saindoux, la graisse de porc, le suif, les matières grasses de lait, les huiles ou graisses recyclées à partir de l'industrie alimentaire, et leurs mélanges.

15. Procédé selon la revendication 1, dans lequel dans l'hydrotraitement, le composant gazole (A) est choisi parmi les gazoles résultant d'une distillation primaire, les gazoles provenant de processus de conversion, et leurs mélanges.

16. Procédé selon la revendication 15, dans lequel le composant (A) est choisi parmi un gazole léger de craquage catalytique (LCO), les gazoles résultant d'une conversion thermique, les gazoles résultant de la conversion de résidus, et leurs mélanges.

17. Procédé selon la revendication 16, dans lequel les gazoles résultant de la conversion de résidus sont issus d'un processus en lit fixe, lit bouillonnant et en suspension.

18. Procédé selon la revendication 1, dans lequel le composant essence (A1) a une température T95 n'excédant pas 240 °C.

19. Procédé selon la revendication 1 ou 18, dans lequel l'essence est choisie parmi les essences issues de processus catalytiques, les essences issues de processus de reformage, et leurs mélanges.

20. Procédé selon la revendication 19, dans lequel l'essence est choisie parmi les essences lourdes FCC telles quelles ou désulfurées, l'essence lourde de reformage, et leurs mélanges.

21. Procédé selon la revendication 1 ou 8, dans lequel le composant (A) est un LCO en des quantités dans la plage de 30 à 70 % p/p, le composant (A1) est choisi parmi les naphtas HCN ou les essences lourdes de reformage, en une quantité dans la plage de 1 à 20 % p/p, et le composant d'origine biologique est présent en des quantités dans la plage de 20 à 50 % p/p, tous les pourcentages se rapportant au poids total de la somme des composants.

22. Procédé selon la revendication 1, comportant en outre des additifs pour améliorer les propriétés à froid, un antimousse, des additifs pro-cétane, un agent antirouille, des détergents, des additifs destinés à améliorer le pouvoir lubrifiant, des agents antioxydants, des agents anti-usure, des agents antistatiques.

23. Procédé selon la revendication 1, dans lequel le support pour le catalyseur d'hydrotraitement est choisi parmi l'alumine, la silice, l'oxyde de zirconium, l'oxyde de titane, une zéolithe, des oxydes mixtes, ou leurs mélanges.

24. Procédé selon la revendication 1, dans lequel le métal ou les métaux contenu(s) dans le catalyseur d'hydrotraitement est/sont choisi(s) parmi Pd, Pt, Ni, ou parmi les paires de métaux Ni-Mo, Ni-W, Co-Mo et Co-W.

25. Procédé selon la revendication 1, dans lequel le catalyseur d'hydrotraitement est choisi parmi les compositions catalytiques Ni-Mo-P sur zéolithe, et Pd/zéolithe.

26. Procédé selon la revendication 1, dans lequel l'hydrotraitement est effectué dans une zone de réaction comprenant un ou plusieurs lit(s) catalytique(s), dans un ou plusieurs réacteur(s).

27. Procédé selon la revendication 1 ou 26, dans lequel l'hydrotraitement est effectué dans une zone de réaction comprenant un ou plusieurs lit(s) catalytique(s) contenant des catalyseurs d'hydrotraitement identiques ou différents.

28. Procédé selon la revendication 1, dans lequel l'hydrotraitement est effectué à une température dans la plage comprise entre 340 et 380 °C.

29. Procédé selon la revendication 1, dans lequel l'hydrotraitement est effectué sous une pression dans la plage comprise entre 50 et 100 bars.

30. Procédé selon la revendication 24, dans lequel les catalyseurs à base de Ni-Mo, Ni-W, Co-Mo et Co-W sont sulfurés avant d'être utilisés.

31. Procédé selon la revendication 1, dans lequel le composant d'origine biologique est soumis à un prétraitement avant d'être soumis à l'hydrotraitement, ledit prétraitement étant effectué par adsorption, traitement par des résines échangeuses d'ions ou des lavages légèrement acides.
